# EUROPÄISCHE PATENTSCHRIFT

(11) **EP 3 170 232 B1**
(45) Veröffentlichungstag und Bekanntmachung des Hinweises auf die Patenterteilung: **09.05.2018**
(21) Anmeldenummer: 15756813.0
(22) Anmeldetag: 17.07.2015
(51) Int. Cl.: H02B 1/54

(54) **UNTERBAUKONSTRUKTION ZUR ERHÖHUNG DER ERDBEBENSICHERHEIT EINES HOCHSPANNUNGSBAUTEILS**
SUBSTRUCTURE FOR INCREASING THE EARTHQUAKE RESISTANCE OF A HIGH-VOLTAGE COMPONENT
INFRASTRUCTURE DESTINÉE À AUGMENTER LA RÉSISTANCE D'UN COMPOSANT À HAUTE TENSION VIS-À-VIS DES TREMBLEMENTS DE TERRE

(30) Priorität: 18.07.2014 AT 505022014
(43) Veröffentlichungstag der Anmeldung: 24.05.2017
(73) Patentinhaber: Coil Holding GmbH, 4070 Eferding (AT)
(72) Erfinder: EDER, Josef, A-4150 Rohrbach (AT); GAUN, Alexander, A-4073 Wilhering (AT)
(74) Vertreter: Burger, Hannes
(86) Internationale Anmeldenummer: PCT/AT2015/050171
(87) Internationale Veröffentlichungsnummer: WO 2016/007982

(56) Entgegenhaltungen:
- EP-A2- 2 161 803
- WO-A1-2013/064167
- US-A- 3 789 174
- US-A- 4 577 826

## Beschreibung

Die Erfindung betrifft eine Unterbaukonstruktion zur Erhöhung der Erdbebensicherheit von zumindest einem Hochspannungsbauteil, insbesondere einer Drosselspule für elektrische Energieversorgungsnetze, wie dies im Anspruch 1 angegeben ist.

In Gebieten, in welchen an die erdbebensichere Aufstellung von Drosselspulen nur geringe Anforderungen gestellt werden, werden diese auf säulenartige Stützisolatoren gestellt. Diese Stützisolatoren, welche gegenüber dem Erdboden abgestützt sind, und auf welchen das Gewicht der Drosselspule lastet, müssen mit einer entsprechend großen Länge ausgeführt werden, um Kriechströme über die Isolatoren gering zu halten bzw. weitestgehend zu vermeiden. Dementsprechend kann es vorkommen, dass bei entsprechend hohen Betriebs- bzw. Netzspannungen die Isolatoren mit einer Länge von 10m und mehr ausgeführt werden müssen. Standardmäßige Unterbaukonstruktionen sind zur Aufstellung in Erdbebengebieten nur bedingt geeignet, da bei einem Erdbeben erhöhte mechanische Belastungen an den standardmäßigen Konstruktionen auftreten.

Bei Erdbeben treten die größten Querbeschleunigungen in einem Erregerfrequenzbereich des Erdbebens von ca. 1 Hz bis 10 Hz auf. Die oben beschriebenen Konstruktionen mit einer derart großen Länge der Stützisolatoren weisen eine Eigenfrequenz auf, welche im Bereich dieser kritischen Erregerfrequenz liegt. Somit kann es bei entsprechend geringer Dämpfung der Unterbaukonstruktion zu Resonanzproblemen kommen, durch welche die Unterbaukonstruktion der Drosselspule, vor allem aufgrund der hohen mechanischen Belastungen von Seiten des relativ schweren Hochspannungsbauteils, nicht mehr standhalten kann.

Die WO 2014/008597 A1 beschreibt ein dämpfendes Stützlager, welches unter anderem zur Anordnung zwischen einem Porzellan-Isolator und einer Luftkern-Drosselspule vorgesehen ist. Dessen Eigenschaften sind bei Anwendung in Zonen mit hoher Erdbebenbeanspruchung nur bedingt zufriedenstellend.

Aus der US 3,789,174 A ist eine Unterbaukonstruktion zur erdbebensicheren Aufstellung eines Transformators sowie eines Leistungsschalters bekannt. Die Unterbaukonstruktion umfasst eine Stützkonstruktion, welche im Untergrund verankert ist und in Form eines zweireihigen Portals ausgebildet ist. Die Stützkonstruktion weist Stützen auf, an welchen ein Träger angebracht ist, welcher Träger zwei zueinander distanzierte Stützen überspannt. Weiters umfasst die Unterbaukonstruktion eine Plattform, welche über Zugstangen am Träger der Stützkonstruktion aufgehängt ist. Die Zugstangen, welche sowohl an der Plattform, als auch am Träger gelenkig gelagert sind, sind vertikal ausgerichtet und parallel zueinander angeordnet. Durch diese Anordnung kann sich die Plattform relativ zur Stützkonstruktion schwingend bewegen, wodurch Bewegungen des Untergrundes auf welchem die Stützkonstruktion verankert ist, an der Plattform nur gedämpft auftreten. An der Plattform sind säulenartige Isolatoren angebracht, wobei je ein hochspannungsführender Teil, beispielsweise ein Transformator, so an einem säulenartigen Isolator angebracht ist, dass der hochspannungsführende Teil von der Plattform entsprechend weit beabstandet ist, um Kriechströme zu vermindern bzw. weitestgehend zu vermeiden und um Spannungsüberschläge zu vermeiden.

Aus der DE 30 10 281 A1 ist eine Unterbaukonstruktion zur erdbebensicheren Aufstellung eines Transformators oder eines Induktors bekannt. Die Unterbaukonstruktion umfasst eine Stützkonstruktion, an welcher ähnlich dem Aufbau einer Schaukel an beiden Enden eines rohrförmigen Trägers je zwei spitzwinkelig zueinander ausgerichtete Stützen angebracht sind, welche Stützen am Untergrund befestigt sind und den die Stützen überbrückenden Träger haltern. Am rohrförmigen Träger sind um die Trägerachse schwenkbare Halterungen angebracht. An diesen Halterungen sind beidseitig der Trägerachse Zugmittel angebracht, wobei an den Zugmitteln Transformatoren aufgehängt sind. Die Zugmittel sind hierbei als Isolatorketten ausgebildet. Je Transformator sind vier Isolatorketten angebracht, wobei je Transformator zwei Paare von Isolatorketten an der schwenkbaren Halterung befestigt sind. Die paarweise in Richtung zur schwenkbaren Halterung verlaufenden Isolatorketten sind V-Förmig angeordnet, wobei die Beabstandung der Isolatorketten zueinander am Transformator geringer ist, als die Beabstandung der Isolatorketten zueinander an der schwenkbaren Halterung. Zudem sind die zwei Paare von Isolatorketten in Querrichtung gesehen V-Förmig zueinander angeordnet.

Die US 4 577 826 A und die EP 2 161 803 A2 offenbaren eine Plattform für Hochspannungsbauteile. Die Plattform ist auf senkrechten Stützen in Form von Isolatoren angeordnet. Zur Erhöhung der Erdbebensicherheit ist eine Verstrebung durch zwei diagonal zwischen den senkrechten Stützen angeordnete Isolatoren vorgesehen. Die diagonal angeordneten Isolatoren sind mittels Seilen miteinander gekoppelt, wobei die Seile an einen Dämpfer gekoppelt sind.

Die WO 2013064167 A1 offenbart eine Einrichtung zum elektrisch isolierten Tragen von Hochspannungsgeräten mit elektrisch nicht leitenden Stützisolatoren, die zum elektrisch isolierten Aufständern einer die Hochspannungsgeräte aufnehmenden Trageplattform auf einem Fundament eingerichtet sind. Jeder Stützisolator erstreckt sich von einem mit der Trageplattform verbundenen Auflager zum Fundament hin, wobei die Isolatoren derart winkelig zueinander angeordnet sind, dass zwei mit dem gleichen Auflager verbundene Stützisolatoren bezüglich des gemeinsamen Auflagers einen spitzen Winkel aufspannen.

Die in der US 3,789,174 A beschriebene Ausführung besitzt den Nachteil, dass aufgrund des Aufbaues der Unterbaukonstruktion die erste Eigenfrequenz bei Verwendung von sehr langen Isolatoren nur unzureichend beeinflusst werden kann, um sie aus dem kritischen Bereich hinaus zu verschieben. Außerdem weist die Unterbaukonstruktion nur eine unzureichende Dämpfung auf.

Die in der DE 30 10 281 A1 beschriebene Ausführung besitzt den Nachteil, dass es durch die Aufhängung des Transformators an nur einem horizontal verlaufenden Träger, bei einem Erdbeben zu einer Verkippung des Transformators kommt. Weiters kann bei dem gezeigten Aufbau nur ein begrenzt schwerer Transformator aufgenommen werden, ohne dass es zu einer Verformung oder zu einem Bruch der Unterbaukonstruktion kommt.

Der vorliegenden Erfindung liegt die Aufgabe zugrunde, eine verbesserte Unterbaukonstruktion zur möglichst ausfallssicheren Aufstellung eines Hochspannungsbauteiles in einem erdbebengefährdeten Gebiet zu schaffen.

Diese Aufgabe der Erfindung wird durch die Merkmale gemäß Anspruch 1 gelöst.

Erfindungsgemäß ist eine Unterbaukonstruktion zur Erhöhung der Erdbebensicherheit von zumindest einem Hochspannungsbauteil, insbesondere einer Drosselspule für elektrische Energieversorgungsnetze vorgesehen. Die Unterbaukonstruktion umfasst eine Plattform, welche zur lastabtragenden Aufnahme des Hochspannungsbauteiles ausgebildet ist und welche Plattform durch zumindest drei Zugmittel an einer Tragvorrichtung einer Stützkonstruktion abgehängt ist. Die Plattform ist durch je eine erste gelenkige Verbindung mit einem ersten Endabschnitt der Zugmittel verbunden, und in einem zweiten Endabschnitt sind die Zugmittel durch je eine zweite gelenkige Verbindung mit der Tragvorrichtung verbunden. Die Tragvorrichtung ist mittels zumindest drei Stützen am Boden abgestützt. Die Stützen sind durch Hochspannungsisolatoren aus elektrisch isolierendem Material gebildet, welche das zumindest eine Hochspannungsbauteil gegenüber Erdpotential elektrisch isolieren und lastabtragend am Boden abstützen.

Ein Vorteil der erfindungsgemäßen Ausbildung liegt darin, dass die Stützen aus einem isolierenden Material mit einer hohen Längsausdehnung bzw. Bauhöhe ausgeführt werden können, um Kriechströme über das isolierende Material weitestgehend zu vermeiden. Insbesondere in Bezug auf hohe, zu erwartende Erdbebenbeanspruchungen in Kombination mit relativ hohen Betriebsspannungen des Hochspannungsbauteils bietet die erfindungsgemäße Konstruktion besonders vorteilhafte Wirkungen und Effekte. Das auf einem erhöhten Spannungspotential befindliche Hochspannungsbauteil mitsamt der ebenfalls auf erhöhtem Spannungspotential befindlichen Plattform kann durch entsprechend lange Stützen in Form von Isolatoren entsprechend weit vom Untergrund entfernt angeordnet werden, um einerseits einen Spannungsüberschlag gegenüber Erdpotential zu vermeiden und andererseits genügend große Kriechstrecken zwischen dem Hochspannungspotential und dem Erdpotential realisieren zu können. Die erfindungsgemäße Ausbildung weist dabei einen besonderen Vorteil bei der Aufstellung von Hochspannungsbauteilen, insbesondere von trockenisolierten Drosselspulen, mit einer Betriebsspannung von mehr als 500 kV auf. Die erfindungsgemäße Unterbaukonstruktion kann möglichst platzsparend aufgebaut werden, wodurch es möglich ist, den zur Verfügung stehenden Raum für die Aufstellung einer Drosselspule im Vergleich zur vorbekannten Ausführung gemäß der US 3,789,174 A möglichst effizient zu nutzen und den Flächenbedarf für die Aufstellung möglichst gering zu halten. Von Vorteil ist weiters, dass durch eine frei wählbare Länge bzw. durch eine anforderungsspezifisch einfach gestaltbare Längendimensionierung der Zugmittel die Eigenschwingungen, insbesondere die erste Eigenschwingung oder erste Eigenfrequenz der Unterbaukonstruktion bzw. des Gesamtsystems aus Unterbaukonstruktion und Drosselspule, beeinflusst werden kann und somit in einen gewünschten bzw. günstigeren Frequenzbereich verschoben werden kann. Von besonderem Vorteil ist, dass ein Großteil der Masse des Systems mit der ersten Eigenfrequenz schwingt. Durch die erfindungsgemäße Unterbaukonstruktion kann die erste Eigenfrequenz des Systems entsprechend beeinflusst werden, sodass sie außerhalb jenes Erregerfrequenzbereiches des Erdbebens liegt, bei welchem die größten Querbeschleunigungen auftreten. Darüber hinaus können die Hochspannungsisolatoren eine gewisse Dämpfungswirkung aufweisen, wodurch die an der Plattform maximal auftretenden Beschleunigungen reduziert werden können.

Weiters kann es zweckmäßig sein, wenn die Länge der Zugmittel, insbesondere ein Abstand zwischen der ersten gelenkigen Verbindung und der zweiten gelenkigen Verbindung, zwischen 0,3m und 3m, insbesondere zwischen 1,3m und 1,5m beträgt. Von Vorteil ist hierbei, dass durch ein Zugmittel mit dieser Länge erste Eigenfrequenzen des erfindungsgemäßen Gesamtsystems erreicht werden können, welche bei etwa 0,4 Hz bis 0,5 Hz liegen. Somit liegt durch diese Maßnahme die maßgebliche erste Eigenfrequenz des Gesamtsystems außerhalb der kritischen Erregerfrequenz eines typischen Erdbebens.

Ferner ist es zweckmäßig, wenn die Zugmittel lotrecht ausgerichtet und parallel zueinander verlaufend zwischen der Tragvorrichtung und der Plattform angeordnet sind. Hierbei ist von Vorteil, dass es während des Erdbebens, und somit während der horizontalen Schwingung der Plattform, zu keiner Verkippung der Plattform durch die schwingende Bewegung kommt. Darüber hinaus wird durch dieses Maßnahme erreicht, dass die Plattform ausreichende Freiheitsgrade aufweist, um eine schwingende Bewegung der Plattform zu ermöglichen und eine horizontale Schwingbewegung der Plattform dabei zu keiner Verspannung innerhalb der Zugmittel führt, wodurch diese beschädigt werden könnten.

Darüber hinaus kann vorgesehen sein, dass die Zugmittel in Form von Zugstangen ausgebildet sind. Die Ausbildung einer Zugstange weist den Vorteil auf, dass eine Zugstange begrenzt auch Druck- bzw. Schubkräfte aufnehmen kann. Somit kann bei einer Vertikalschwingung der Unterbaukonstruktion ein "Hüpfen" der Plattform vermindert bzw. hintan gehalten werden. Darüber hinaus können Zugstangen einfach hergestellt werden, wobei auch eine exakte bzw. konstante Länge der Zugstangen im Fertigungsverfahren problemlos realisierbar ist.

Alternativ dazu kann vorgesehen sein, dass die Zugmittel durch Seile gebildet sind. Der Einsatz von Seilen weist den Vorteil auf, dass insbesondere die gelenkigen Verbindungen zwischen Seil und Plattform, sowie zwischen Seil und Tragvorrichtung einfach und kostengünstig ausgeführt werden können, da kein Drehgelenk benötigt wird, sondern aufgrund der Flexibilität des Seiles das Seil selbst eine gelenkige bzw. winkelausgleichende Aufhängung bietet. Darüber hinaus kann ein Seil aus einem elastischen Material gefertigt werden bzw. in sich relativ elastisch sein, wodurch eine in vertikaler Richtung flexible bzw. elastische Aufhängung der Plattform realisiert werden kann.

Weiters kann vorgesehen sein, dass die Zugmittel aus einem elektrisch isolierenden Material gebildet sind. Hierbei kann von Vorteil sein, dass die Gesamtlänge der Isolationsstrecke zwischen Hochspannungsbauteil und Erdpotential verlängert werden kann. Somit können auftretende Kriechströme weiter reduziert und die Isolationsmaßnahmen insgesamt verbessert werden.

Vorteilhaft ist auch eine Ausprägung gemäß welcher vorgesehen sein kann, dass die Tragvorrichtung zumindest drei Trägerelemente umfasst, welche Trägerelemente zumindest annähernd gleiche Länge aufweisen und ring- oder kranzförmig aneinandergereiht sind, wobei zumindest zwei Trägerelemente an ihren einander zugewandten Stirnenden in einem Abstand zueinander angeordnet sind. Durch die kranzförmige Anordnung der Trägerelemente kann erreicht werden, dass besonders für im Querschnitt runde Hochspannungsbauteile, wie Luftkern-Drosselspulen, die Unterbaukonstruktion möglichst platzsparend ausgeführt werden kann. Darüber hinaus kann durch die kranzförmige Anordnung von Trägerelementen mit jeweils gleicher oder annähernd gleicher Länge erreicht werden, dass eine vom Hochspannungsbauteil aufgebrachte Last gleichmäßig auf die Tragvorrichtung und damit auf die Stützkonstruktion verteilt werden kann. Somit ist gewährleistet, dass die als Stützen ausgeführten Hochspannungsisolatoren möglichst gleichmäßig belastet werden. Nachdem zumindest zwei Trägerelemente an ihren einander zugewandten Stirnenden in einem Abstand zueinander angeordnet sind, kann vermieden werden, dass die metallischen, kreis- bzw. ringförmig aneinander gereihten Trägerelemente einen vollständig geschlossenen, elektrisch leitenden Ring bilden, wenn zudem dieser Abstand nicht durch ein metallisches Element, wie z.B. durch eine unterhalb liegende Abstützplatte, elektrisch verbunden bzw. überbrückt wird. Eine elektrische Isolierung bzw. Trennung via diesen Abstand kann beispielsweise durch eine elektrisch isolierende Zwischenlage erzielt werden, welche zwischen dem Standfuß eines Trägerelementes und der darunter liegenden Stützfläche des Hochspannungsisolators angeordnet sein kann. In den kranzförmig angeordneten Trägerelementen induzierte Spannungen und ungewollte induzierte Verluste können somit vermieden bzw. verringert werden.

Gemäß einer Weiterbildung ist es möglich, dass die beiden Stirnenden von aneinander gereihten Trägerelementen jeweils an einem gemeinsamen Hochspannungsisolator abgestützt sind. Von Vorteil ist hierbei, dass die Trägerelemente dadurch stabil und einfach mit den jeweiligen Hochspannungsisolatoren verbunden bzw. darauf abgestützt werden können. Darüber hinaus können die Trägerelemente dadurch einzeln an den Hochspannungsisolatoren montiert werden, wodurch ein Zusammenbau der Unterbaukonstruktion, insbesondere der Stützkonstruktion, erleichtert werden kann.

Ferner kann es zweckmäßig sein, wenn zumindest ein Übergangsabschnitt zwischen aufeinander folgenden, kranzförmig aneinander gereihten Trägerelementen elektrisch isolierend ausgeführt ist. Durch diese Ausbildung kann vermieden werden, dass die kreisförmig aneinander gereihten Trägerelemente einen elektrisch leitenden Ring bilden, in welchem es zu einer Induktion und somit zu ungewollten induzierten Verlusten kommen kann.

Darüber hinaus kann vorgesehen sein, dass zwischen wenigstens einem der Hochspannungsisolatoren und den darauf abgestützten Trägerelementen ein elastisches Zwischenelement angeordnet ist. Vorteilhaft ist hierbei, dass Relativbewegungen zwischen Hochspannungsisolator und Trägerelement, welche während eines Erdbebens auftreten, durch das elastische Zwischenelement ausgeglichen bzw. abgefedert werden können, sodass die Gefahr eines mechanischen Versagens der Verbindung zwischen Hochspannungsisolator und Trägerelement vermindert werden kann.

Weiters kann vorgesehen sein, dass zumindest eines der Zugmittel in der Längsmitte von zumindest einem der Trägerelemente mit diesem Trägerelement verbunden ist. Von Vorteil ist hierbei, dass durch diese Maßnahme das Zugmittel möglichst weit vom Hochspannungsisolator entfernt ist. Somit kann die Gefahr eines möglichen Spannungsüberschlages zwischen Zugmittel und Isolator generell reduziert bzw. auch während eines Erdbebens vermindert werden.

Gemäß einer besonderen Ausprägung ist es möglich, dass an der Plattform zumindest ein Abstützelement angeordnet ist, mit welchem das Hochspannungsbauteil in einem vertikalen Abstand zur Plattform aufnehmbar ist. Ein derartiges Abstützelement weist den Vorteil auf, dass dadurch das Hochspannungsbauteil von der metallischen Plattform distanziert ist. Somit kann erreicht werden, dass das Hochspannungsbauteil in vertikaler Richtung gesehen nicht oder nur geringfügig von den Abstützelementen umgeben ist. Dadurch kann die Gefahr eines möglichen Spannungsüberschlages zwischen Hochspannungsbauteil und Abstützelementen vermindert werden. Insbesondere kann es vorteilhaft sein, wenn eine Längserstreckung der Abstützelemente in etwa gleich groß gewählt wird, wie eine Längserstreckung der Zugelemente. Dadurch kann erreicht werden, dass das Hochspannungsbauteil in vertikaler Richtung gesehen zur Gänze oder zumindest überwiegend oberhalb der Tragvorrichtung positioniert ist, insbesondere mit ausreichendem Abstand zu den Trägerelementen platziert ist.

Entsprechend einer vorteilhaften Weiterbildung kann vorgesehen sein, dass das zumindest eine Abstützelement aus einem elektrisch isolierenden Material gebildet ist, sodass das Hochspannungsbauteil gegenüber der Plattform elektrisch isoliert ist. Hierbei kann von Vorteil sein, dass die Gesamtlänge der Isolationsstrecke zwischen Hochspannungsbauteil und Erdpotential verlängert werden kann. Dies hat Vorteile für das Kriechstromverhalten der gesamten Anordnung.

Insbesondere kann es vorteilhaft sein, dass zumindest an einer der gelenkigen Verbindungen wenigstens eine Feldsteuervorrichtung, insbesondere ein Koronaring angeordnet ist. Diese Ausbildung führt dazu, um elektrische Entladungen, welche im Bereich der relativ spitz ausgeführten gelenkigen Verbindungen auftreten können, vermindern bzw. weitestgehend vermeiden zu können.

Weiters kann es zweckmäßig sein, dass die Plattform in Ansicht auf die Aufstandsebene der Stützkonstruktion sternförmig ausgebildet ist, wobei einzelne Tragarme der Plattform an einem gemeinsamen Knotenpunkt miteinander verbunden sind. Hierbei ist von Vorteil, dass die Konstruktion der Plattform möglichst einfach aufgebaut sein kann, um Gewicht einzusparen und damit eine übermäßige Belastung der Hochspannungsisolatoren zu vermeiden. Darüber hinaus kann dadurch ein Ringschluss innerhalb der Plattform vermieden werden, wodurch eventuelle, durch einen derartigen Ringschluss entstehende Verluste, weitestgehend vermieden werden können.

Ferner kann vorgesehen sein, dass die Hochspannungsisolatoren zur Bildung der Stützkonstruktion achsparallel zueinander angeordnet sind. Von Vorteil ist hierbei, dass durch eine achsparallele Anordnung der Hochspannungsisolatoren zueinander, die Unterbaukonstruktion eine gewisse Flexibilität bzw. Neigungsvariabilität aufweisen kann. Somit können sich die Hochspannungsisolatoren in einem Erdbebenfall elastisch zurückfedernd bewegen, wodurch mechanische Spannungsspitzen in den Hochspannungsisolatoren vermindert werden.

Darüber hinaus kann es zweckmäßig sein, dass die Zugmittel aus einem elastischen Material ausgeführt sind und/oder wenigstens ein Federelement umfasst, wobei wenigstens eines der Zugmittel bedarfsweise einen Schwingungsdämpfer umfasst. Von Vorteil ist hierbei, dass durch diese Maßnahme nicht nur Horizontalschwingungen, sondern auch Vertikalschwingungen aufgefangen werden können. Dadurch kann ein vertikales "Hüpfen" der Plattform vermindert bzw. zur Gänze unterbunden werden. Durch diese Maßnahme können außerdem die im Erdbebenfall auf die Unterbaukonstruktion wirkenden Kräfte reduziert werden.

Schließlich kann vorgesehen sein, dass die erste und/oder zweite gelenkige Verbindung durch eine Kugelkopfverbindung gebildet ist, welche ein gelenkig gelagertes Kugelelement umfasst, welches von einem Bolzen durchsetzt ist. Von Vorteil ist hierbei, dass bei einem derartigen Kugelelement die Drehachse der gelenkigen Bolzenverbindung, und die Drehachse der gelenkigen Kugelkopfverbindung in einem an der Längsachse des Zugmittels liegenden Fixpunkt nicht zueinander verschoben werden. Dadurch kann erreicht werden, dass die Plattform frei schwingen kann, ohne dass es aufgrund von Längsverschiebungen in den Zugmitteln zu mechanischen Verspannungen kommt.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht auf eine beispielsgemäß doppelstöckig ausgeführte Drosselspule mit einem mechanischen Unterbau für verbesserte Erdbebensicherheit;
- Fig. 2: eine perspektivische Ansicht auf den Unterbau mit einer zentralen Plattform zur Abstützung einer Drosselspule oder eines sonstigen Hochspannungsbauteils im Detail;
- Fig. 3: der Unterbau gemäß Fig. 2 in Ansicht von unten;
- Fig. 4: einen vertikalen Längsschnitt durch den Unterbau, insbesondere gemäß der Schnittlinie IV - IV in Fig. 3;
- Fig. 5: einen vertikalen Schnitt durch den Unterbau, insbesondere gemäß der Schnittlinie IV - IV in Fig. 3 mit einem Seil als Zugmittel;
- Fig. 6: einen vertikalen Schnitt durch den Unterbau, insbesondere gemäß der Schnittlinie IV - IV in Fig. 3 mit einem Stab als Zugmittel;
- Fig. 7: eine Detailansicht einer gelenkigen Verbindung zwischen Zugmittel und Tragvorrichtung;
- Fig. 8: eine Detailansicht einer Verbindung und Abstützung zwischen einem Hochspannungsisolator und Trägerelementen;
- Fig. 9: ein Diagramm zur Darstellung einer charakteristischen Erregerfrequenz eines Erdbebens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

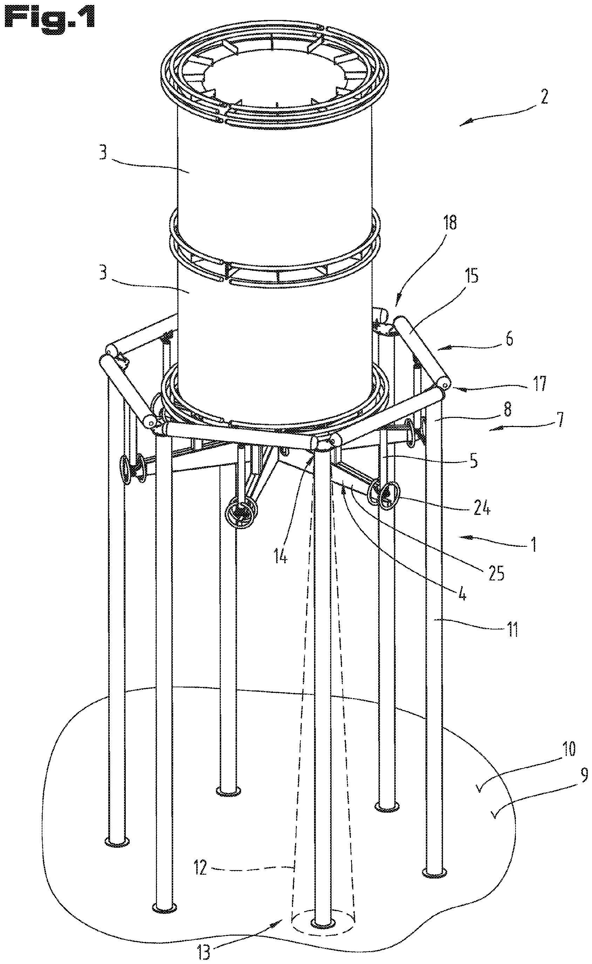

Fig. 1 zeigt eine perspektivische Ansicht einer Unterbaukonstruktion 1 für ein Hochspannungsbauteil 2, wobei das Hochspannungsbauteil 2 an der Unterbaukonstruktion 1 befestigt bzw. abgestützt ist. Die dargestellte Unterbaukonstruktion 1 dient insbesondere dazu, um Hochspannungsbauteile 2 in elektrischen Energieversorgungsystemen möglichst ausfallssicher positionieren zu können bzw. um eine erhöhte Erdbebensicherheit gewährleisten zu können.

Die erfindungsgemäße Unterbaukonstruktion 1 erweist sich insbesondere bei der Verwendung von relativ schweren Hochspannungsbauteilen 2, wie etwa einer trockenisolierten Luftkern-Drosselspule 3, als vorteilhafte Ausgestaltungsmöglichkeit der Unterbaukonstruktion 1. Derartige Drosselspulen 3, wie sie in Fig. 1 dargestellt sind, können ein Stückgewicht von 10 Tonnen und mehr erreichen. Werden, wie in Fig. 1 dargestellt, derartige Drosselspulen 3 vertikal übereinander, egal in welchem vertikalen Abstand zueinander, gestapelt, so kann in typischen Anwendungen eine Masse von 30 Tonnen und mehr auf die Unterbaukonstruktion 1 einwirken.

Zusätzlich kann vorgesehen sein, dass an derartigen Drosselspulen 3 eine Betriebsspannung von 800 kV und mehr anliegt. Somit werden an die Unterbaukonstruktion 1 nicht nur bezüglich der mechanischen Belastung hohe Anforderungen gestellt, sondern auch bezüglich deren elektrischen Isolation gegenüber Erdpotential.

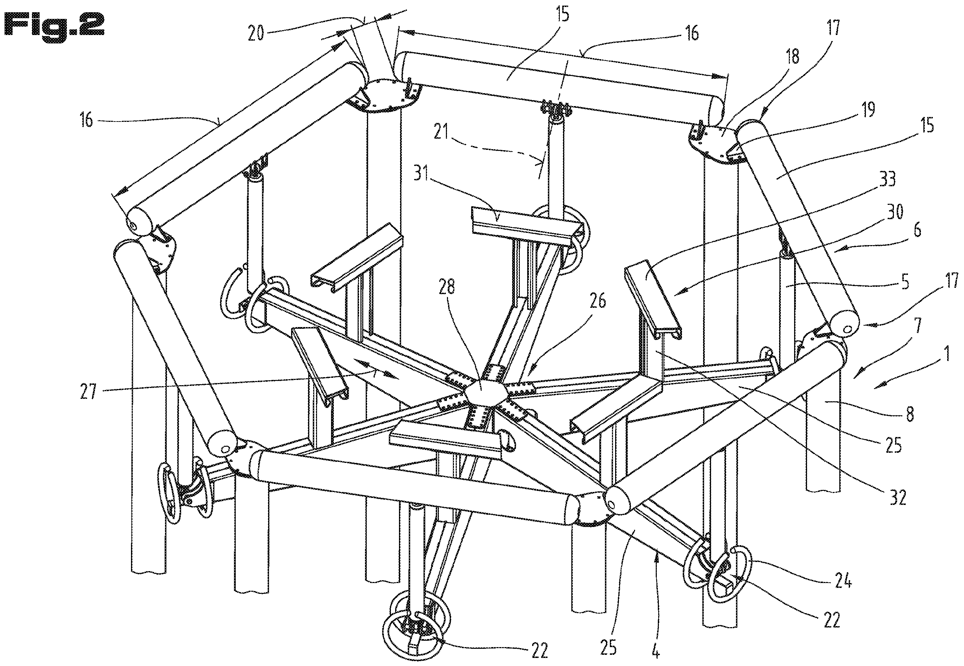

In Fig. 2 ist die Unterbaukonstruktion 1 in einer weiteren perspektivischen Darstellung gezeigt, in welcher die Drosselspulen 3 nicht dargestellt sind, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. Der Figurenbeschreibung kann durch eine Zusammenschau Fig. 1 und 2 am besten gefolgt werden.

Wie in Fig. 1 ersichtlich, umfasst die Unterbaukonstruktion 1 eine Plattform 4 auf welcher die Drosselspule 3 lastübertragend abgestützt ist. Die Plattform 4 ist über Zugmittel 5 an einer Tragvorrichtung 6 in horizontaler Richtung beweglich aufgehängt. Diese Tragvorrichtung 6 ist Teil einer Stützkonstruktion 7. Die Stützkonstruktion 7 umfasst weiters Stützen 8, welche die Tragvorrichtung 6 am Boden 9 abstützen. Der Boden 9 wird insbesondere durch eine Aufstandsebene 10 definiert, in welcher die Stützen 8 mittels einer form- oder kraftschlüssigen Verbindung verankert bzw. befestigt sind. Die Aufstandsebene 10 kann beispielsweise durch ein Betonfundament, wie etwa ein Streifen- oder Punktfundament, oder durch ein Flächenfundament, realisiert werden. In bestimmten geografischen Zonen kann es auch notwendig sein, dass die Aufstandsebene 10 beispielsweise durch ein Säulenfundament realisiert wird. Erfindungsgemäß sind die Stützen 8 als Hochspannungsisolatoren ausgebildet, welche aufgrund ihrer Materialeigenschaften das erhöhte Betriebsspannungspotential eines Hochspannungsbauteiles 2 gegenüber dem Erdpotential am Boden 9 elektrisch isolieren können. Derartige Hochspannungsisolatoren 11 weisen standardmäßig eine rippenförmige Oberflächenkonturierung auf. Zur vereinfachten, anschaulichen Darstellung sind in sämtlichen Figuren die Hochspannungsisolatoren 11 als rohrförmige Gebilde dargestellt.

Wie in Fig. 1 ersichtlich kann es vorteilhaft sein, wenn die Unterbaukonstruktion 1 sechs Hochspannungsisolatoren 11 aufweist. Diese Anzahl der Hochspannungsisolatoren ist jedoch nur für das aktuell vorliegende Ausführungsbeispiel von Vorteil, in dem Drosselspulen 3 mit einer Gesamtmasse von etwa 34 Tonnen auf Hochspannungsisolatoren 11 mit einer Länge von etwa 10m abgestützt werden. Wird die Gesamtmasse der Drosselspulen 3 größer, so kann es notwendig sein, dass mehr Hochspannungsisolatoren 11 verwendet werden. Wird jedoch die Last oder die erforderliche Aufbauhöhe kleiner, so ist es auch möglich, dass als Minimum drei Hochspannungsisolatoren 11 verwendet werden können. Hinzu kommt, dass die jeweils vorliegende Erdbebenzone einen Einfluss auf die Dimensionierung der Unterbaukonstruktion 1 hat.

Bezüglich der Auswahl eines geeigneten Werkstoffes für einen als Stütze 8 ausgebildeten Hochspannungsisolator 11 werden hohe Ansprüche an die Festigkeit bzw. in einem gewissen Ausmaß an die Elastizität der Werkstoffe gestellt. Vorzugsweise werden hier Porzellanisolatoren oder Verbundisolatoren verwendet. Darüber hinaus ist es auch möglich, dass die verwendeten Isolatoren anstatt als rohrförmige Gebilde als konische Hochspannungsisolatoren 12, bzw. auch als Kombinationen aus konischen und rohrförmigen Hochspannungsisolatoren in einen Stück ausgebildet sind. Ein derartiger, konisch ausgebildeter Hochspannungsisolator 12 ist in Fig. 1 mit strichlierten Linien schematisch angedeutet. Von Vorteil an einem derartig ausgebildeten Isolator kann sein, dass erhöhte Biegespannungen, wie sie am Isolatorfuß 13 auftreten können, von einem größeren Isolatorquerschnitt besser abgefangen werden können, wobei geringere Biegespannungen, wie sie am Isolatorkopf 14 auftreten, auch von einem kleineren Isolatorquerschnitt abgefangen werden können. Somit können die Masse und damit einhergehend die Herstellkosten für einen derartigen Hochspannungsisolator 12 möglichst gering gehalten werden, wobei zusätzlich die Festigkeitseigenschaften des Hochspannungsisolators 12 verbessert werden.

Wie in der Zusammenschau aus Fig. 1 und Fig. 2 ersichtlich, umfasst die Tragvorrichtung 6 mehrere Trägerelemente 15, welche ring- oder kranzförmig aneinander gereiht sind. Dabei kann vorgesehen sein, dass die Trägerelemente 15 jeweils die gleiche Länge 16 aufweisen. Dadurch ergibt sich, wie aus Fig. 2 ersichtlich, eine ring- oder kranzförmige Anordnung der Trägerelemente 15 zueinander, wobei sich innerhalb der Trägerelemente 15 ein Kreis einschreiben lässt.

Weiters kann vorgesehen sein, dass die Trägerelemente 15 an deren Stirnende 17 jeweils an einem gemeinsamen Hochspannungsisolator 11 abgestützt sind. Hierbei kann vorgesehen sein, dass ein Übergangsabschnitt 18 ausgebildet ist, in welchem die Trägerelemente 15 zueinander beabstandet und mit dem Hochspannungsisolator 11 verbunden sind und dabei elektrisch voneinander isoliert sind. Weiters kann vorgesehen sein, dass die Trägerelemente 15 jeweils an deren Stirnende 17 einen Standfuß 19 aufweisen, mittels welchem die Trägerelemente 15 am Hochspannungsisolator 11 abgestützt sind.

Dadurch, dass ein Trägerelement 15 jeweils an dessen Stirnende 17 an einem Hochspannungsisolator 11 aufliegt bzw. dadurch, dass zwei Stirnenden 17 von zueinander benachbarten Trägerelementen 15 an einem gemeinsamen Hochspannungsisolator 11 aufliegen, ist die Anzahl der Trägerelemente gleich der Anzahl der Hochspannungsisolatoren 11. Die exakte Anzahl der benötigten Trägerelemente 15 bzw. Hochspannungsisolatoren 11 hängt vom Gewicht des zu tragenden Hochspannungsbauteiles 2 und von der Betriebsspannung des Hochspannungsbauteils 2 bzw. von der Dimensionierung der Hochspannungsisolatoren 11 und der Trägerelemente 15 ab. Im Gegensatz zu den Hochspannungsisolatoren 11, welche auf Biegung und auf Knickung beansprucht sind, sind die Trägerelemente 15 auf Biegung beansprucht.

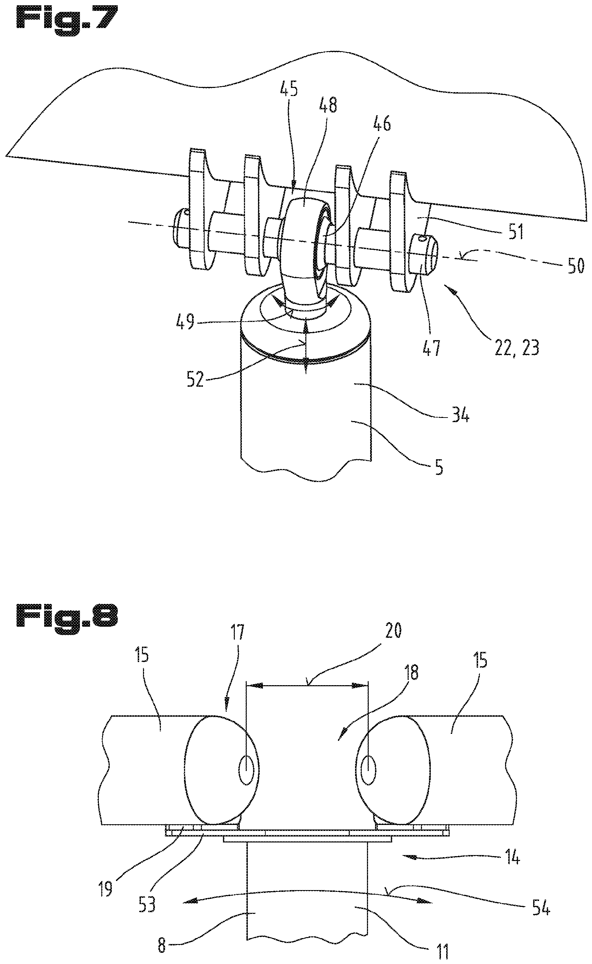

Bei der Anordnung der einzelnen Trägerelemente 15 zueinander kann weiters vorgesehen sein, dass zwei zueinander benachbarte Trägerelemente 15 an deren Stirnenden 17 jeweils in einem Abstand 20 zueinander distanziert angeordnet sind. Dies kann notwendig sein, um mit den Trägerelementen 15 keinen leitenden Ringschluss zu bilden, in welchem elektrische Spannung induziert werden kann. Eine detaillierte Darstellung der möglichen Verbindung zwischen Trägerelement 15 und Hochspannungsisolator 11 wird in weiterer Folge in Fig. 8 noch genauer beschrieben bzw. gezeigt.

Weiters kann vorgesehen sein, dass die Zugmittel 5, welche zur Aufhängung der Plattform 4 dienen, jeweils in der Längsmitte 21 eines Trägerelementes 15 befestigt sind. Dies hat den Vorteil, dass die Zugmittel 5 möglichst weit von den Hochspannungsisolatoren 11 beabstandet sind und es somit durch die Schwingbewegung der Plattform 4 im Erdbebenfall zu keiner Berührung zwischen Plattform 4 und Hochspannungsisolator 11 kommt. Vor allem wird dadurch auch die Gefahr vermindert, dass es zu einem Spannungsüberschlag zwischen Plattform 4 und Hochspannungsisolator 11 kommt.

Durch die Aufhängung der Zugmittel 5 in der Längsmitte 21 eines Trägerelementes 15 tritt das größte Biegemoment am Trägerelement genau in der Längsmitte 21 auf. Bei statischer Belastung des Trägerelementes 15, das heißt im normalen Anwendungsfall ohne Erdbeben, ist nur ein Biegemoment um die Querachse des Trägerelementes aufgrund der Masse der aufgehängten Komponenten vorhanden. Tritt jedoch ein Erdbeben auf, so wirkt aufgrund der Schwingbewegung der Plattform 4 auch eine horizontal angreifende Kraft auf die Trägerelemente 15. Dies ist bei der Auswahl geeigneter Trägerelemente 15 zu berücksichtigen. Ein I-Träger beispielsweise würde gut zur Aufnahme von Biegemomenten um die Querachse geeignet sein, bei zusätzlichen Biegemomenten um die Hochachse, aufgrund von horizontalen Querkräften jedoch besteht die Gefahr einer Ausknickung des Trägers. Aus diesem Grunde hat sich zum Einsatz als Trägerelement 15 ein Hohlprofil, wie etwa ein Formrohr, als vorteilhaft erwiesen, welches sowohl bezüglich der Querachse als auch bezüglich der Hochachse ein hohes Flächenträgheitsmoment aufweist.

Weiters kann vorgesehen sein, dass das Zugmittel 5 mittels einer ersten gelenkigen Verbindung 22 mit der Plattform 4 und mittels einer zweiten gelenkigen Verbindung 23 mit der Tragvorrichtung 6, insbesondere einem Trägerelement 15, verbunden ist. Mögliche Ausgestaltungsformen der gelenkigen Verbindung 22, 23 werden in weiterer Folge in Fig. 7 noch genauer gezeigt bzw. beschrieben.

Wie aus Fig. 2 weiters ersichtlich, kann vorgesehen sein, dass im Bereich der ersten gelenkigen Verbindung 22 und/oder im Bereich der zweiten gelenkigen Verbindung 23 eine Feldsteuervorrichtung, insbesondere ein Koronaring 24 oder ein kalottenförmiges Abschlusselement, angeordnet ist. Durch den Einsatz eines Koronaringes 24 oder eines kalottenförmigen Abschlusselementes kann die Gefahr des Auftretes von elektrischen Entladungen oder Teilentladungen gegenüber der Atmosphäre unterbunden bzw. weitestgehend vermieden werden.

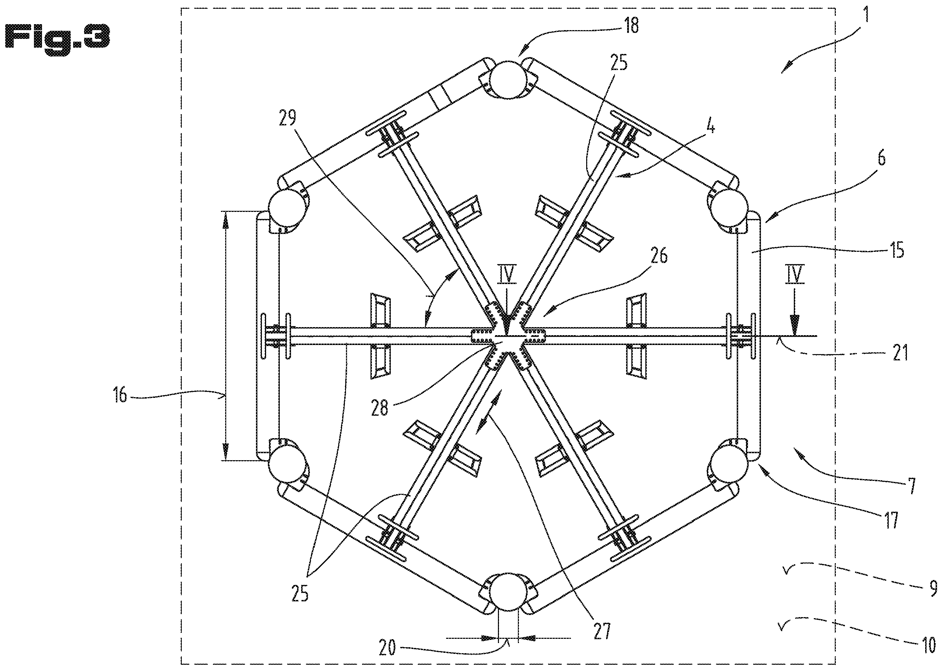

In Fig. 3 ist die Unterbaukonstruktion 1 in einer Draufsicht gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie in einer Zusammenschau aus Fig. 2 und Fig. 3 ersichtlich, kann vorgesehen sein, dass die Plattform 4 durch mehrere Tragarme 25 gebildet ist, welche in einem zentralen Knotenpunkt 26 miteinander verbunden sind. Durch diese sternförmige Anordnung der einzelnen Tragarme 25 kann erreicht werden, dass jeweils an einem Tragarm 25 ein Zugmittel 5 befestigt sein kann.

Alternativ zu einer Ausführungsvariante in welcher die Tragarme 25 an einem gemeinsamen Knotenpunkt aneinander befestig sind, kann auch vorgesehen sein, dass die Tragarme 25 an einem zentral angeordneten Verbindungselement, wie etwa einem ringförmigen Gebilde befestig sind.

Die Tragarme 25 sind vorzugsweise so ausgestaltet, dass sie über deren Längsrichtung 27 gesehen unterschiedliche Querschnittsabmessungen aufweisen, wobei der Querschnitt an die jeweils auftretenden Biegemomente angepasst ist. Da jeweils ein Tragarm 25 an einem Zugmittel 5 befestigt ist, ist die Anzahl der Tragarme 25 vorzugsweise gleich groß gewählt, wie die Anzahl der vorhandenen Zugmittel 5.

Im gemeinsamen Knotenpunkt 26 können die einzelnen Tragarme 25 mittels einer stoffschlüssigen Verbindung, wie etwa einer Schweißverbindung miteinander verbunden sein. In einer Alternativvariante ist es auch denkbar, dass die einzelnen Tragarme 25 mittels einer Schraubverbindung miteinander verschraubt sind. Eine derartige Verschraubung kann beispielsweise unter Zuhilfenahme eines sogenannten Knotenbleches 28 realisiert werden, welches im Knotenpunkt 26 mit den einzelnen Tragarmen 25 verbunden wird.

Wie aus Fig. 3 ersichtlich, ist ein Winkel 29, in welchem zwei Tragarme 25 zueinander angeordnet sind, von der Anzahl der eingesetzten Tragarme 25 abhängig. Vorzugsweise wird die Plattform 4 so ausgeführt, dass der Winkel 29 zwischen den einzelnen Tragarmen 25 jeweils gleich groß ist, sodass sich das charakteristische, sternförmige Erscheinungsbild der Plattform 4 ergibt.

In einer ersten Ausführungsvariante kann vorgesehen sein, dass das Hochspannungsbauteil 2, insbesondere die Drosselspule 3, direkt an der Plattform 4 befestigt wird.

In einer Alternativvariante kann, wie in Fig. 2 ersichtlich, vorgesehen sein, dass an der Plattform 4, insbesondere an den Tragarmen 25, Abstützelemente 30 angeordnet sind, welche zur Aufnahme des Hochspannungsbauteiles 2 vorgesehen sind. Die Abstützelemente 30 sind insbesondere dazu vorgesehen, das Hochspannungsbauteil 2 von der metallischen Plattform 4 zu beabstanden. Dies bringt den Vorteil mit sich, dass die Tragvorrichtung 6 nicht direkt im Nahbereich des Hochspannungsbauteils 2 angeordnet ist, wodurch die Gefahr eines möglichen Spannungsüberschlages zwischen Hochspannungsbauteil 2, insbesondere Drosselspule 3, und Tragvorrichtung 6 vermindert wird.

Die Abstützelemente 30 sind vorzugsweise in etwa mittig eines Tragarmes 25 angeordnet. Die Abstützelemente 30 bilden eine Aufstandsfläche 31 aus, auf welche das Hochspannungsbauteil 2 aufgesetzt werden kann und welche das Hochspannungsbauteil 2 ausreichend gut abstützen kann. Um eine entsprechend große Aufstandsfläche 31 zur optimalen Lastverteilung zu erreichen, kann vorgesehen sein, dass die Abstützelemente 30 neben einer Strebe 32 auch ein Verbindungselement 33 umfassen, durch welche die Aufstandsfläche 31 vergrößert wird. Das Verbindungselement 33 kann beispielsweise aus einem Formprofil gebildet werden, welches beispielsweise durch eine kraftschlüssige Verbindung, wie etwa eine Schweißverbindung, mit der Strebe 32 verbunden sein kann.

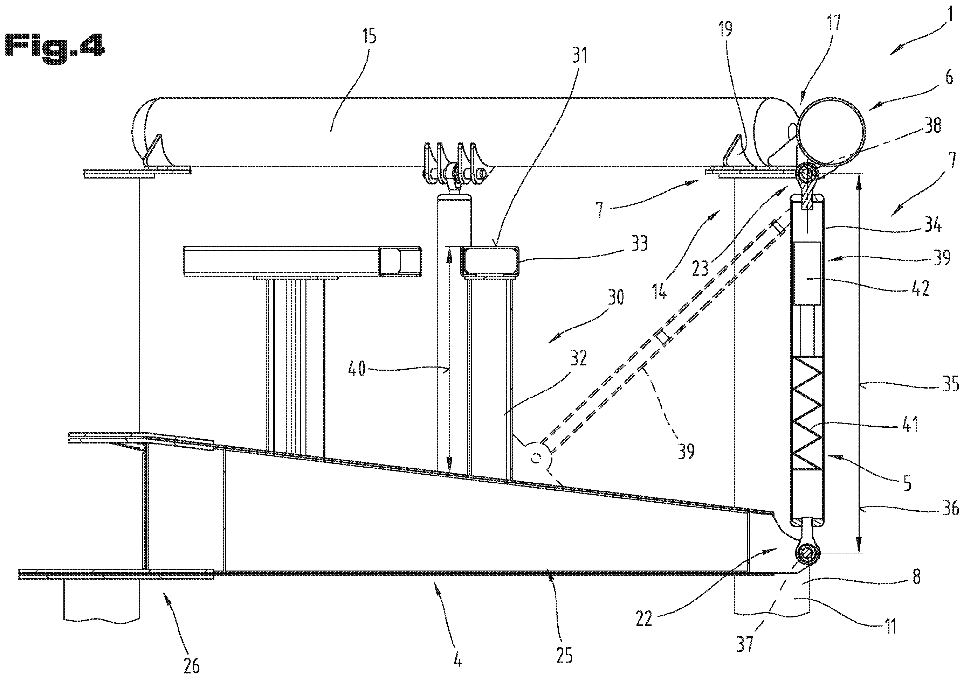

In Fig. 4 ist der in Längsrichtung variierende Querschnitt des Tragarmes 25 gut ersichtlich, wobei auch ersichtlich ist, dass der Querschnitt an den Biegemomentenverlauf zumindest annähernd angepasst ist. Um den Tragarm 25 bei möglichst hoher Steifigkeit mit möglichst geringem Gewicht ausführen zu können, kann vorgesehen sein, dass, wie in Fig. 4 ersichtlich, der Tragarm 25 als Formelement, insbesondere als Blechumformteil, ausgeführt ist.

Fig. 4 zeigt eine Schnittansicht, insbesondere gemäß der Schnittlinie IV - IV aus Fig. 3, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 3 hingewiesen bzw. Bezug genommen.

In einer bevorzugten Ausführungsform wie sie in Fig. 4 dargestellt ist, kann das Zugmittel 5 als Zugstange 34 ausgeführt sein. In Fig. 4 sind darüber hinaus die erste gelenkige Verbindung 22 und die zweite gelenkige Verbindung 23, welche beispielsweise als Bolzenverbindung ausgeführt sein können, deutlich erkennbar. Insbesondere ist erkennbar, dass eine Länge 35 des Zugmittels 5 durch einen Abstand 36 der gelenkigen Verbindungen zueinander definiert wird. Insbesondere erstreckt sich der Abstand 36 von einer Drehachse 37 der ersten gelenkigen Verbindung 22 zu einer Drehachse 38 der zweiten gelenkigen Verbindung 23. Die gelenkigen Verbindungen 22, 23 sind jeweils in den Endabschnitten bzw. Endbereichen des Zugmittels 5 ausgebildet.

Die Länge 35 des Zugmittels 5 beeinflusst die erste Eigenfrequenz des Gesamtsystems. Präziser ausgedrückt werden die ersten Eigenfrequenzen des Gesamtsystems durch die Länge der Hochspannungsisolatoren 11 und die Länge 35 des Zugmittels 5 bzw. deren Verhältnis zueinander beeinflusst, wobei aufgrund der Komplexität des Gesamtsystems der direkte Zusammenhang nicht in einer einfachen Formel ausgedrückt werden kann.

Wie weiters aus Fig. 4 ersichtlich, kann in einer bevorzugten Ausführungsvariante vorgesehen sein, dass in der Ruhelage der Plattform 4 die Drehachse 38 des zweiten Drehgelenkes 23 vertikal über der Drehachse 37 des ersten Drehgelenkes 22 positioniert ist. Somit ergibt sich in der Ruhelage der Plattform 4 eine vertikale Ausrichtung des Zugmittels 5.

Weiters kann vorgesehen sein, dass, wie in Fig. 4 schematisch angedeutet, zumindest ein Dämpfungselement 39 zwischen Plattform 4 und Stützkonstruktion 7 angeordnet ist, durch welches eine horizontale Schwingbewegung gedämpft werden kann. Zur möglichen Positionierung des Dämpfungselementes 39 gibt es verschiedene Ausführungsmöglichkeiten, welche hier nicht im Detail beschrieben werden.

Wie aus Fig. 4 weiters ersichtlich, ist eine Länge 40 des Abstützelementes 30 in Abhängigkeit von der Länge 35 des Zugmittels 5 auszulegen. Die Länge 40 des Abstützelementes 30 wird hierbei, wie bereits erwähnt, vorzugsweise so groß gewählt, dass ein auf die Aufstandsfläche 31 aufgesetztes Hochspannungsbauteil 2 möglichst weit oberhalb der Tragvorrichtung 6 bzw. zumindest überwiegend oberhalb der Tragvorrichtung 6 platziert ist und somit einen möglichst großen Abstand zu der Tragvorrichtung 6 aufweist.

Weiters kann vorgesehen sein, dass, wie in Fig. 4 schematisch angedeutet, das Zugmittel 5 aus einem elastischen Material ausgeführt ist und/oder wenigstens ein Federelement 41 umfasst, durch welches die Länge 35 des Zugmittels 5 elastisch variiabel ist. Ein derartiges Federelement 41 könnte beispielsweise einen Teil des Zugmittels 5 ausbilden. Hierbei ist es beispielsweise denkbar, dass ein Zwischenabschnitt des Zugmittels 5 durch das Federelement 41 gebildet wird. Weiters ist es auch denkbar, dass das Zugmittel 5 teleskopartig ineinander verschiebbar ausgeführt ist und das Federelement 41 innerhalb des Zugmittels 5 angeordnet ist.

Darüber hinaus ist es auch denkbar, dass, wie schematisch angedeutet, ein Schwingungsdämpfer 42 ausgeführt ist, durch welchen die elastische Bewegung eines mit einem Federelement 41 ausgeführten Zugmittels 5 gedämpft wird. Auch dieser Schwingungsdämpfer 42 kann beispielsweise in das Zugmittel 5 integriert sein. Darüber hinaus ist es auch möglich, dass der Schwingungsdämpfer 42 parallel zum Zugmittel 5 angeordnet ist.

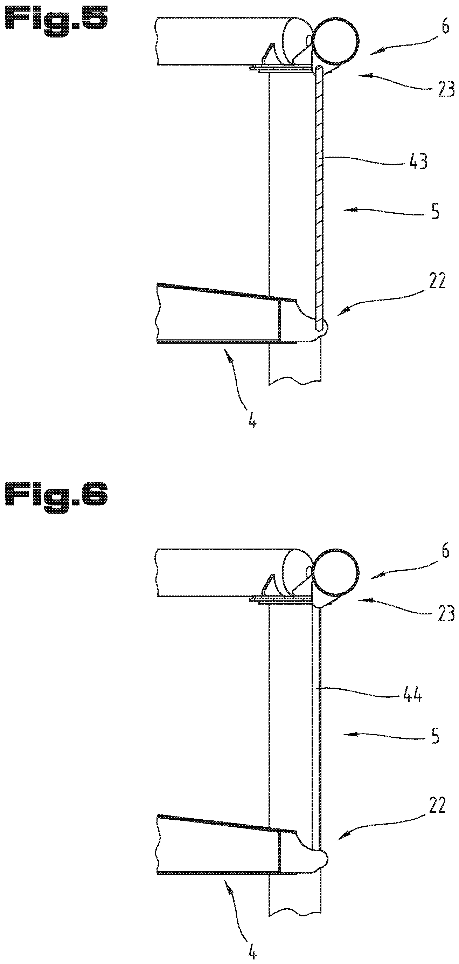

In Fig. 5 ist eine weitere und gegebenenfalls für sich eigenständige Ausführungsform der Unterbaukonstruktion 1 gezeigt, wobei wiederum für gleiche Teile gleiche Bezugszeichen bzw. Bauteilbezeichnungen wie in der vorangegangenen Fig. 4 verwendet werden. Um unnötige Wiederholungen zu vermeiden, wird auf die detaillierte Beschreibung in der vorangegangenen Fig. 4 hingewiesen bzw. Bezug genommen.

In der in Fig. 5 dargestellten Ausführungsvariante ist erkennbar, dass es auch möglich ist, dass das Zugmittel 5 beispielsweise als Seil 43 ausgeführt ist. Das Seil 43 kann beispielsweise unter Verwendung einer Seilkausche an der Plattform 4 bzw. an der Tragvorrichtung 6 befestigt sein, wobei durch die inhärente Flexibilität des Seiles 43 die erste gelenkige Verbindung 22 bzw. die zweite gelenkige Verbindung 23 erreicht wird. Somit ist auch mittels eines derartigen Systems bzw. einer derartigen Seilverbindung die Plattform 4 frei in horizontaler Richtung schwingbar. Darüber hinaus kann vorgesehen sein, dass das Seil 43 als elastisches Seil ausgebildet ist, wodurch der oben beschriebene Abfederungs- bzw. Dämpfungseffekt erreicht wird. Das Seil 43 kann aber auch als endlose, ringförmig ausgebildete Seilschlaufe ausgeführt sein, wobei durch diese Doppelsträngigkeit technische Vorteile hinsichtlich Zugfestigkeit und Seilführung erzielt werden können.

In Fig. 6 ist eine weitere und gegebenenfalls für sich eigenständige Ausführungsform der Unterbaukonstruktion 1 gezeigt, wobei wiederum für gleiche Teile gleiche Bezugszeichen bzw. Bauteilbezeichnungen wie in den vorangegangenen Figuren 4 und 5 verwendet werden. Um unnötige Wiederholungen zu vermeiden, wird auf die detaillierte Beschreibung in der vorangegangenen Figuren 4 und 5 hingewiesen bzw. Bezug genommen.

Wie in der weiteren in Fig. 6 dargestellten Ausführungsvariante ersichtlich, ist es auch möglich, dass das Zugmittel 5 in Form einer Stange 44 ausgebildet ist, welche beispielsweise durch eine kraftschlüssige oder stoffschlüssige Verbindung mit der Tragvorrichtung 6 bzw. der Plattform 4 verbunden ist. In einer derartigen Ausführungsvariante werden die gelenkigen Verbindungen 22, 23 dadurch realisiert, dass es zu einer elastischen Verformung der Stange 44 kommen kann.

In Fig. 7 ist eine Detailansicht einer bevorzugten Ausführungsvariante der gelenkigen Verbindungen 22, 23 dargestellt, wobei diese vorzugsweise in Kombination mit einer Zugstange 34 ausgeführt sind. Wie aus Fig. 7 ersichtlich, kann vorgesehen sein, dass die gelenkigen Verbindungen 22, 23 durch eine Kugelkopfverbindung 45 realisiert werden. Hierbei kann vorgesehen sein, dass ein Kugelelement 46 von einem Bolzen 47 durchsetzt ist. Das Kugelelement 46 ist hier vorzugsweise schwenkbar in einer entsprechenden Kugelaufnahme 48 gelagert, sodass das Zugmittel 5 in Schwenkrichtung 49 relativ zum Bolzen 47 verschwenkt werden kann. Zusätzlich ist vorgesehen, dass entweder das Kugelelement 46 relativ zum Bolzen 47 bezüglich einer Bolzenachse 50 verschwenkbar ist, oder dass der Bolzen 47 relativ zu einer Gabel 51, in welcher der Bolzen 47 aufgenommen ist, bezüglich der Bolzenachse 50 verschwenkbar ist. Durch diese Ausführung der gelenkigen Verbindung 22, 23 kann erreicht werden, dass das Zugmittel 5 in allen Richtungen frei gegenüber der Plattform 4 bzw. der Tragvorrichtung 6 verschwenkt werden kann.

Weiters kann vorgesehen sein, dass die Kugelaufnahme 48 in Verstellrichtung 52 gegenüber der Zugstange 34 verstellbar ist. Dadurch kann erreicht werden, dass die Länge des Zugmittels 5 einstellbar ist. Dies ist von Vorteil, um etwa Fertigungstoleranzen in der Unterbaukonstruktion 1 ausgleichen zu können und die Plattform 4 möglichst exakt in die Waagrechte einrichten zu können. Natürlich kann diese Verstellbarkeit der Länge der Zugmittel 5 auch an einer anderen Stelle der Zugmittel 5 vorgesehen sein.

Fig. 8 zeigt in einer Seitenansicht das Detail einer möglichen Ausführungsvariante zur Verbindung zweier benachbarter Trägerelemente 15, insbesondere von deren Stirnenden 17 mit einem gemeinsamen als Stütze 8 ausgebildeten Hochspannungsisolator 11. Wie in Fig. 8 ersichtlich, kann vorgesehen sein, dass ein elastisches Zwischenelement 53 ausgebildet ist, welches zwischen Isolatorkopf 14 und Standfuß 19 eingebracht ist. Dieses elastische Zwischenelement 53 ist dazu vorgesehen, um eine während eines Erdbebens auftretende Neige- bzw. Schwenkbewegung 54 des Hochspannungsisolators 11 ausgleichen zu können, sodass es nicht zu einem Versagen der Verbindung zwischen Trägerelement 15 und Hochspannungsisolator 11 kommt. Insbesondere soll durch das elastische Zwischenelement 53 ein Winkelversatz zwischen Hochspannungsisolator 11 und den darauf aufliegenden Trägelementen 15 ausgeglichen werden können.

Das elastische Zwischenelement 53 kann beispielsweise aus einem elastischen Kunststoffmaterial gebildet sein. Natürlich ist es auch denkbar, dass hier ein anderes Material verwendet wird. Darüber hinaus kann vorgesehen sein, dass das elastische Zwischenelement 53 aus einem elektrisch isolierenden Material gebildet ist, sodass zwei zueinander benachbarte Trägerelemente 15 elektrisch voneinander isoliert sind.

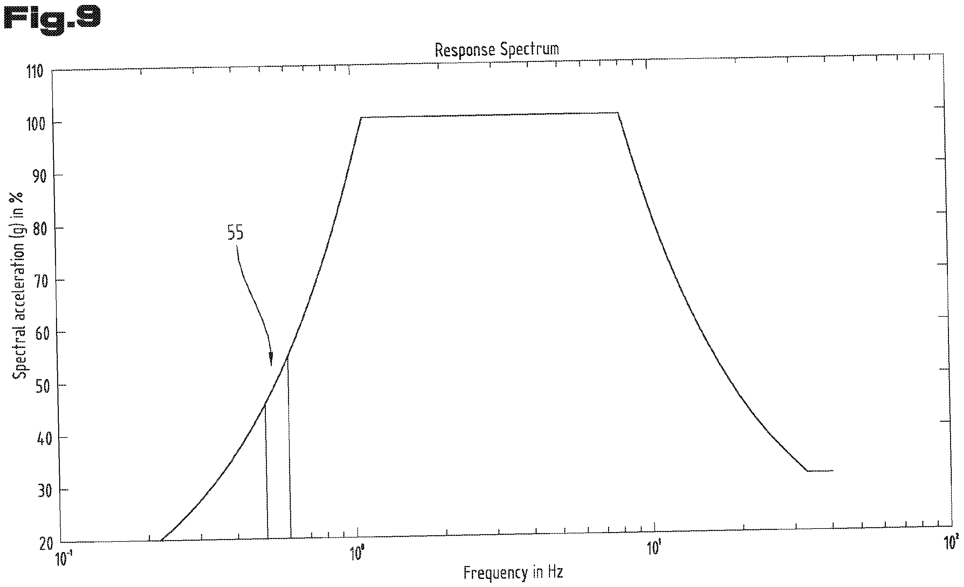

Fig. 9 zeigt in einem Diagramm die bei einem Erdbeben hervorgerufenen Querbeschleunigungen, welche in einem gewissen Frequenzspektrum verstärkt auftreten. Auf der Abszisse ist hierbei die vom Erdbeben erzeugte Erregerfrequenz auf einer logarithmischen Skala aufgetragen. Auf der Ordinate ist die zu erwartende Querbeschleunigung in Abhängigkeit von der Frequenz aufgetragen. Der Absolutwert der laut Norm tatsächlich zu erwartenden Beschleunigung hängt von der geographischen Lage des potentiellen Aufstellungsortes ab, wodurch zur Veranschaulichung eine Darstellung mit normierter Beschleunigung gewählt wurde, wobei 100% der Beschleunigung dem jeweils laut Norm bzw. am Standort höchsten Beschleunigungswert entspricht.

Wie aus dem Diagramm ersichtlich, treten die maximalen Beschleunigungen in einem Frequenzspektrum von ca. 1 Hz bis etwa 10 Hz auf. Je nach Aufstellungsart weisen herkömmliche Unterbaukonstruktionen zur Aufstellung einer Drosselspule eine erste Eigenfrequenz auf, welche genau in diesem kritischen Frequenzbereich liegt, wodurch es im Erdbebenfall zu einer Resonanzkatastrophe kommen kann.

Durch die erfindungsgemäße Ausgestaltung der Unterbaukonstruktion 1, insbesondere durch Anpassung der Länge 35 des Zugmittels 5 in Abhängigkeit von der Länge des Hochspannungsisolators 11, kann erreicht werden, dass die erste Eigenfrequenz des Drosselspulen-Unterbausystems in einen Betriebsbereich 55 von etwa 0,4Hz bis 0,5Hz verschoben wird. Somit sind die hierbei auftretenden Maximalbeschleunigungen bedeutend geringer, was zu einer erhöhten Erdbebensicherheit führt.

Durch den erfindungsgemäßen Aufbau der Unterbaukonstruktion 1 kann darüber hinaus erreicht werden, dass die Hochspannungsisolatoren 11 als Schwingungsdämpfer wirken, wodurch die Erdbebensicherheit ebenfalls positiv beeinflusst wird.

In Abhängigkeit der Höhe der am Hochspannungsbauteil 2 anliegenden Spannung, in Abhängigkeit der Länge der verwendeten Hochspannungsisolatoren 11 und in Abhängigkeit der Länge der Zugmittel 5 befindet sich die Plattform 4 zumeist mehr als 1m oberhalb des Bodenniveaus. Insbesondere bei Energieversorgungsnetzen im Hoch- & Höchstspannungsbereich, sowohl bei Gleichstrom als auch bei Wechselstrom, befindet sich die Plattform 4 mit der Drosselspule 3 bis zu 20m oberhalb des Bodenniveaus, welche Anforderungen durch die erfindungsgemäße Unterbaukonstruktion 1 in vorteilhafter Art und Weise erfüllt werden.

Die Ausführungsbeispiele zeigen mögliche Ausführungsvarianten der Unterbaukonstruktion 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1 bis 3, 4, 5, 6, 7 und 8 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Unterbaukonstruktion diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Unterbaukonstruktion | 29 | Winkel |
| 2 | Hochspannungsbauteil | 30 | Abstützelement |
| 3 | Drosselspule | 31 | Aufstandsfläche |
| 4 | Plattform | 32 | Strebe |
| 5 | Zugmittel | 33 | Verbindungselement |
| 6 | Tragvorrichtung | 34 | Zugstange |
| 7 | Stützkonstruktion | 35 | Länge |
| 8 | Stützen | 36 | Abstand gelenkige Verbindungen zueinander |
| 9 | Boden | | |
| 10 | Aufstandsebene | 37 | Drehachse erstes Drehgelenk |
| 11 | Hochspannungsisolator | 38 | Drehachse zweites Drehgelenk |
| 12 | konischer Hochspannungsisolator | 39 | Dämpfungselement |
| 13 | Isolatorfuß | 40 | Länge Abstützelement |
| 14 | Isolatorkopf | 41 | Federelement |
| 15 | Trägerelement | 42 | Schwingungsdämpfer |
| 16 | Länge Trägerelement | 43 | Seil |
| 17 | Stirnende | 44 | Stange |
| 18 | Übergangsabschnitt | 45 | Kugelkopfverbindung |
| 19 | Standfuß | 46 | Kugelelement |
| 20 | Abstand Trägerelemente zueinander | 47 | Bolzen |
| | | 48 | Kugelaufnahme |
| 21 | Längsmitte | 49 | Schwenkrichtung |
| 22 | erste gelenkige Verbindung | 50 | Bolzenachse |
| 23 | zweite gelenkige Verbindung | 51 | Gabel |
| 24 | Koronaring | 52 | Verstellrichtung |
| 25 | Tragarm | 53 | elastisches Zwischenelement |
| 26 | Knotenpunkt | 54 | Schwenkbewegung |
| 27 | Längsrichtung eines Tragarmes | 55 | Betriebsbereich |
| 28 | Knotenblech | | |

## Patentansprüche

1. Unterbaukonstruktion (1) zur Erhöhung der Erdbebensicherheit von zumindest einem Hochspannungsbauteil (2), insbesondere einer Drosselspule (3) für elektrische Energieversorgungsnetze, umfassend eine Plattform (4), welche zur lastabtragenden Aufnahme des Hochspannungsbauteiles (2) ausgebildet ist und welche Plattform (4) durch zumindest drei Zugmittel (5) an einer Tragvorrichtung (6) einer Stützkonstruktion (7) abgehängt ist, wobei die Plattform (4) durch je eine erste gelenkige Verbindung (22) mit den Zugmitteln (5) verbunden ist, und die Zugmittel (5) durch je eine zweite gelenkige Verbindung (23) mit der Tragvorrichtung (6) verbunden sind, welche Tragvorrichtung (6) mittels zumindest drei Stützen (8) am Boden (9) abgestützt ist, **dadurch gekennzeichnet, dass** die Stützen (8) durch Hochspannungsisolatoren (11) aus elektrisch isolierendem Material gebildet sind, welche das zumindest eine Hochspannungsbauteil (2) gegenüber Erdpotential elektrisch isolieren und lastabtragend am Boden (9) abstützen.

2. Unterbaukonstruktion nach Anspruch 1, **dadurch gekennzeichnet, dass** eine Länge (35) der Zugmittel (5), insbesondere ein Abstand (36) zwischen der ersten gelenkigen Verbindung (22) und der zweiten gelenkigen Verbindung (23), zwischen 0,3m und 3m, insbesondere zwischen 1,3m und 1,5m beträgt.

3. Unterbaukonstruktion nach Anspruch 1 oder 2, **dadurch gekennzeichnet, dass** die Zugmittel (5) lotrecht ausgerichtet und parallel zueinander verlaufend zwischen der Tragvorrichtung (6) und der Plattform (4) angeordnet sind.

4. Unterbaukonstruktion nach einem der vorhergehenden Ansprüche, **dadurch gekennzeichnet, dass** die Zugmittel (5) in Form von Zugstangen (34) ausgebildet sind.

5. Unterbaukonstruktion nach einem der Ansprüche 1 bis 3, **dadurch gekennzeichnet, dass** die Zugmittel (5) durch Seile (43) gebildet sind.

6. Unterbaukonstruktion nach einem der vorhergehenden Ansprüche, **dadurch gekennzeichnet, dass** die Zugmittel (5) aus einem elektrisch isolierenden Material gebildet sind.

7. Unterbaukonstruktion nach einem der vorhergehenden Ansprüche, **dadurch gekennzeichnet, dass** die Tragvorrichtung (6) zumindest drei Trägerelemente (15) umfasst, welche Trägerelemente (15) zumindest annähernd gleiche Länge (16) aufweisen und ring- oder kranzförmig aneinandergereiht sind, wobei zumindest zwei Trägerelemente (15) an ihren einander zugewandten Stirnenden (17) in einem Abstand (20) zueinander angeordnet sind.

8. Unterbaukonstruktion nach Anspruch 7, **dadurch gekennzeichnet, dass** die beiden Stirnenden (17) von aneinander gereihten Trägerelementen (15) jeweils an einem gemeinsamen Hochspannungsisolator (11) abgestützt sind.

9. Unterbaukonstruktion nach Anspruch 7 oder 8, **dadurch gekennzeichnet, dass** zumindest ein Übergangsabschnitt (18) zwischen aufeinander folgenden, kranzförmig aneinander gereihten Trägerelementen (15) elektrisch isolierend ausgeführt ist.

10. Unterbaukonstruktion nach Anspruch 8 oder 9, **dadurch gekennzeichnet, dass** zwischen wenigstens einem der Hochspannungsisolatoren (11) und den darauf abgestützten Trägerelementen (15) ein elastisches Zwischenelement (53) angeordnet ist.

11. Unterbaukonstruktion nach einem der vorhergehenden Ansprüche, **dadurch gekennzeichnet, dass** zumindest eines der Zugmittel (5) in der Längsmitte (21) von zumindest einem der Trägerelemente (15) mit diesem Trägerelement (15) verbunden ist.

12. Unterbaukonstruktion nach einem der vorhergehenden Ansprüche, **dadurch gekennzeichnet, dass** an der Plattform (4) zumindest ein Abstützelement (30) angeordnet ist, mit welchem das Hochspannungsbauteil (2) in einem vertikalen Abstand zur Plattform (4) aufnehmbar ist.

13. Unterbaukonstruktion nach Anspruch 12, **dadurch gekennzeichnet, dass** das zumindest eine Abstützelement (30) aus einem elektrisch isolierenden Material gebildet ist, sodass das Hochspannungsbauteil (2) gegenüber der Plattform (4) elektrisch isoliert ist.

14. Unterbaukonstruktion nach einem der vorhergehenden Ansprüche, **dadurch gekennzeichnet, dass** zumindest an einer der gelenkigen Verbindungen (22, 23) wenigstens eine Feldsteuervorrichtung, insbesondere ein Koronaring (24), angeordnet ist.

15. Unterbaukonstruktion nach einem der vorhergehenden Ansprüche, **dadurch gekennzeichnet, dass** zwischen der Plattform (4) und der Stützkonstruktion (7) zumindest ein Dämpfungselement (39) zur Dämpfung von horizontalen Schwingungsbewegungen der Plattform (4) angeordnet ist.

16. Unterbaukonstruktion nach einem der vorhergehenden Ansprüche, **dadurch gekennzeichnet, dass** die Plattform (4) in Ansicht auf die Aufstandsebene der Stützkonstruktion (7) sternförmig ausgebildet ist, wobei einzelne Tragarme (25) der Plattform (4) an einem gemeinsamen Knotenpunkt (26) miteinander verbunden sind.

17. Unterbaukonstruktion nach einem der vorhergehenden Ansprüche, **dadurch gekennzeichnet, dass** die Hochspannungsisolatoren (11) zur Bildung der Stützkonstruktion (7) achsparallel zueinander angeordnet sind.

18. Unterbaukonstruktion nach einem der vorhergehenden Ansprüche, **dadurch gekennzeichnet, dass** die Zugmittel (5) aus einem elastischen Material ausgeführt sind und/oder wenigstens ein Federelement (41) umfassen, wobei wenigstens eines der Zugmittel (5) bedarfsweise einen Schwingungsdämpfer (42) umfasst.

19. Unterbaukonstruktion nach einem der vorhergehenden Ansprüche, **dadurch gekennzeichnet, dass** die erste (22) und/oder zweite gelenkige Verbindung (23) durch eine Kugelkopfverbindung (45) gebildet ist, welche ein gelenkig gelagertes Kugelelement (46) umfasst, welches von einem Bolzen (47) durchsetzt ist.

## Claims

1. A substructure (1) for increasing the earthquake resistance of at least one high-voltage component (2), in particular a choke coil (3) for electric power supply networks, comprising a platform (4), which is designed for mounting the high-voltage component (2) in a load bearing manner and which platform (4) is suspended by means of at least three tensioning means (5) on a support device (6) of a support structure (7), wherein the platform (4) is connected to the tensioning means (5) by a first articulated connection (22), and the tensioning means (5) are connected respectively by a second articulated connection (23) to the support device (6), which support device (6) is supported on the ground (9) by means of at least three supports (8), **characterized in that**, the supports (8) are formed by high-voltage insulators (11) made from an electrically insulating material, which electrically insulate the at least one high-voltage component (2) from ground potential and support it on the ground in a load-bearing manner (9).

2. The substructure as claimed in claim 1, **characterized in that** a length (35) of the tensioning means (5), in particular the distance (36) between the first articulated connection (22) and the second articulated connection (23), is between 0.3 m and 3 m, in particular between 1.3 m and 1.5 m.

3. The substructure as claimed in claim 1 or 2, **characterized in that** the tensioning means (5) are aligned to be perpendicular and are arranged parallel to one another between the support device (6) and the platform (4).

4. The substructure as claimed in any one of the preceding claims, **characterized in that** the tensioning means (5) are designed in the form of tensioning rods (34).

5. The substructure according to any one of claims 1 to 3, **characterized in that** the tensioning means (5) are formed by cables (43).

6. The substructure as claimed in any one of the preceding claims, **characterized in that** the tensioning means (5) are made from an electrically insulating material.

7. The substructure as claimed in any one of the preceding claims, **characterized in that** the support device (6) comprises at least three bearing support elements (15), which bearing support elements (15) have at least approximately the same length (16) and are arranged next to one another to form a ring or circle, wherein at least two bearing support elements (15) are arranged on their facing end faces (17) at a distance from one another (20).

8. The substructure as claimed in claim 7, **characterized in that** the two end faces (17) are supported by bearing support elements (15) arranged in a row on a common high-voltage insulator (11) respectively.

9. The substructure as claimed in claim 7 or 8, **characterized in that** at least one transitional section (18) between consecutive bearing support elements (15) arranged in a ring is designed to be electrically insulating.

10. The substructure as claimed in claim 8 or 9, **characterized in that** between at least one of the high-voltage insulators (11) and the bearing support elements (15) supported thereon an elastic intermediate element (53) is arranged.

11. The substructure as claimed in any one of the preceding claims, **characterized in that** at least one of the tensioning means (5) in the longitudinal centre (21) is connected by at least one of the bearing support elements (15) to said bearing support element (15).

12. The substructure as claimed in any one of the preceding claims, **characterized in that** on the platform (4) at least one bearing support element (30) is arranged, by means of which the high-voltage component (2) can received at a vertical distance from the platform (4).

13. The substructure as claimed in claim 12, **characterized in that** the at least one bearing support element (30) is made from an electrically insulating material, so that the high-voltage component (2) is electrically insulated from the platform (4).

14. The substructure as claimed in any one of the preceding claims, **characterized in that** on at least one of the articulated connections (22, 23) at least one field control device, in particular a corona ring (24), is arranged.

15. The substructure as claimed in any one of the preceding claims, **characterized in that** between the platform (4) and the support structure (7) at least one damping element (39) is arranged for damping horizontal oscillatory movements of the platform (4).

16. The substructure as claimed in any one of the preceding claims, **characterized in that** the platform (4) is designed to be star-shaped in a view of the contact plane of the support structure (7), wherein individual support arms (25) of the platform (4) are connected together at a common nodal point (26).

17. The substructure as claimed in any one of the preceding claims, **characterized in that** the high-voltage insulators (11) are arranged axially parallel to one another to form the support structure (7).

18. The substructure as claimed in any one of the preceding claims, **characterized in that** the tensioning means (5) are made from an elastic material and/or comprise at least one spring element (41), wherein at least one of the tensioning means (5) comprises if necessary a vibration damper (42).

19. The substructure as claimed in any one of the preceding claims, **characterized in that** the first (22) and/or second articulated connection (23) is formed by a spherical head connection (45), which comprises a flexibly mounted spherical element (46), through which a bolt (47) passes.

## Revendications

1. Infrastructure (1) pour l'augmentation de la sécurité anti-sismique d'au moins un composant à haute tension (2), plus particulièrement d'une bobine d'induction (3) pour des réseaux d'alimentation en énergie électrique, comprenant une plate-forme (4), qui est conçue pour le logement, avec dérivation des charges, du composant à haute tension (2) et cette plate-forme (4) étant suspendue à l'aide d'au moins trois moyens de traction (5) à un dispositif de support (6) d'une structure de soutien (7), la plate-forme (4) étant reliée avec chacun des moyens de traction (5) par l'intermédiaire d'une première liaison articulée (22), et chacun des moyens de traction (5) étant relié avec le dispositif de support (6) par l'intermédiaire d'une deuxième liaison articulée (23), ce dispositif de support (6) étant soutenu au moyen d'au moins trois supports (8) sur le sol (9), **caractérisé en ce que** les supports (8) sont constitués d'isolateurs à haute tension (11) en matériau électriquement isolant, qui isolent électriquement l'au moins un composant à haute tension (2) par rapport au potentiel de mise à la terre et qui s'appuient contre le sol (9) avec une dérivation des charges.

2. Infrastructure selon la revendication 1, **caractérisée en ce qu'**une longueur (35) des moyens de traction (5), plus particulièrement une distance (36) entre la première liaison articulée (22) et la deuxième liaison articulée (23), est entre 0,3 m et 3 m, plus particulièrement entre 1,3 m et 1,5 m.

3. Infrastructure selon la revendication 1 ou 2, **caractérisée en ce que** les moyens de traction (5) sont orientés verticalement et sont disposés parallèlement entre eux entre le dispositif de support (6) et la plate-forme (4).

4. Infrastructure selon l'une des revendications précédentes, **caractérisée en ce que** les moyens de traction (5) sont conçus sous la forme de tirants (34).

5. Infrastructure selon l'une des revendications 1 à 3, **caractérisée en ce que** les moyens de traction (5) sont constitués de câbles (43).

6. Infrastructure selon l'une des revendications précédentes, **caractérisée en ce que** les moyens de traction (5) sont constitués d'un matériau électriquement isolant.

7. Infrastructure selon l'une des revendications précédentes, **caractérisée en ce que** le dispositif de support (6) comprend au moins trois éléments porteurs (15), ces éléments porteurs (15) présentant au moins approximativement la même longueur (16) et étant juxtaposés de manière annulaire ou sous la forme d'une couronne, au moins deux éléments porteurs (15) étant disposés avec une distance (20) entre eux au niveau de leurs extrémités frontales (17) orientées les unes vers les autres.

8. Infrastructure selon la revendication 7, **caractérisée en ce que** les deux extrémités frontales (17) sont soutenues par des éléments porteurs (15) juxtaposés au niveau d'un isolateur à haute tension commun (11).

9. Infrastructure selon la revendication 7 ou 8, **caractérisée en ce qu'**au moins une portion de transition (18) est réalisée de manière électriquement isolante entre des éléments porteurs (15) successifs juxtaposés sous la forme d'une couronne.

10. Infrastructure selon la revendication 8 ou 9, **caractérisée en ce que**, entre au moins un des isolateurs à haute tension (11) et les éléments porteurs (15) qui s'y appuient, est disposé un élément intermédiaire élastique (53).

11. Infrastructure selon l'une des revendications précédentes, **caractérisée en ce qu'**au moins un des moyens de traction (5) est relié, au niveau du centre longitudinal (21), par au moins un des éléments porteurs (15) avec cet élément porteur (15).

12. Infrastructure selon l'une des revendications précédentes, **caractérisée en ce que**, sur la plate-forme (4), est disposé au moins un élément de soutien (30) avec lequel le composant à haute tension (2) peut être logé à une distance verticale par rapport à la plate-forme (4).

13. Infrastructure selon la revendication 12, **caractérisée en ce que** l'au moins un élément de soutien (30) est constitué d'un matériau électriquement isolant de façon à ce que le composant à haute tension (2) soit électriquement isolé par rapport à la plate-forme (4).

14. Infrastructure selon l'une des revendications précédentes, **caractérisée en ce que**, au moins au niveau des liaisons articulées (22, 23), est disposé au moins un dispositif de contrôle de champ, plus particulièrement un anneau à effet corona (24).

15. Infrastructure selon l'une des revendications précédentes, **caractérisée en ce que**, entre la plate-forme (4) et la structure de soutien (7), est disposé au moins un élément d'amortissement (39) pour l'amortissement de mouvements oscillatoires horizontaux de la plate-forme (4).

16. Infrastructure selon l'une des revendications précédentes, **caractérisée en ce que** la plate-forme (4) est conçue sous la forme d'une étoile vue sur le plan vertical de la structure de soutien (7), des bras porteurs individuels (25) de la plate-forme (4) étant reliés entre eux au niveau d'un point nodal commun (26).

17. Infrastructure selon l'une des revendications précédentes, **caractérisée en ce que** les isolateurs à haute tension (11) sont disposés entre eux de manière parallèle pour la formation de la structure de soutien (7).

18. Infrastructure selon l'une des revendications précédentes, **caractérisée en ce que** les moyens de traction (5) sont réalisés à partir d'un matériau élastique et/ou comprennent au moins un élément à ressort (41), au moins un des moyens de traction (5) comprenant si nécessaire un amortisseur de vibrations (42).

19. Infrastructure selon l'une des revendications précédentes, **caractérisée en ce que** la première (22) et/ou la deuxième liaison articulée (23) est constituée d'une liaison à tête sphérique (45), qui comprend un élément sphérique (46) logé de manière articulée, qui est traversé par un axe (47).
